Europäisches Patentamt

European Patent Office

Office européen des brevets

(11) Publication number: **0 223 967**
**A1**

(12) **EUROPEAN PATENT APPLICATION**

(21) Application number: 86113234.8

(22) Date of filing: 26.09.86

(51) Int. Cl.4: **G02F 1/133** , G09G 3/36 ,
//H01L27/12

(30) Priority: 31.10.85 US 793363

(43) Date of publication of application:
03.06.87 Bulletin 87/23

(84) Designated Contracting States:
DE FR GB IT

(71) Applicant: **International Business Machines Corporation**
**Old Orchard Road**
**Armonk, N.Y. 10504(US)**

(72) Inventor: **Alt, Paul Matthew**
**2823 Hedwig Drive**
**Yorktown Heights, NY 10598(US)**
Inventor: **Howard, Webster Eugene**
**1306 McKeel Street**
**Yorktown Heights, NY 10598(US)**

(74) Representative: **Burt, Roger James, Dr.**
**IBM United Kingdom Limited Intellectual Property Department Hursley Park**
**Winchester Hampshire SO21 2JN(GB)**

(54) Thin-film transistor liquid-crystal matrix display.

(57) A TFT/LC display matrix wherein the TFT switching array performs required raster and image generating functions wherein all orthogonal switching line crossovers on the substrate carrying the TFT - (12) are eliminated.

All of the TFT drains (sources) (14,16) in the array are electrically common and connected by a common line on the substrate (10) and off-glass contact to a suitable potential. The gates (22) are connected in conventional fashion to achieve row selection by suitable lines along a first orthogonal axis. The column selection is done by segmenting the counterelectrodes (18') on the top glass plate - (20) into parallel lines orthogonal to the gate (row selection) lines which are registered with the pel electrodes (63) on the substrate, and applying suitable potentials. Switching is done by coupling via the LC element to the sources (drains). The electrical operation of the device is similar to a conventional array.

FIG. 4

## THIN-FILM TRANSISTOR LIQUID-CRYSTAL MATRIX DISPLAY

The present invention relates generally to the field of liquid crystal matrix displays. More particularly, it relates to such displays in which each picture element is activated (controlled) by an individually addressable thin-film transistor switching device.

Thin-film transistor (TFT) arrays have great potential for matrix display applications. A significant obstacle to their commercialisation has been poor yield. While a practical display may require a million TFTs, only a small number of isolated defects are acceptable, and no defects which make an entire column or row of pels inoperative can be tolerated.

Current liquid crystal/thin-film transistor matrix displays can be classified as numerous variations on a single theme. That theme is that on a single substrate 10, one deposits a semiconductor material to form a regular array of 3-terminal switches (TFTs), one for each picture element. On that same substrate orthogonal arrays of conductors are deposited to contact the TFTs and selectively activate picture elements (pels).

In the field of the present invention, the terms picture element, PEL and PIXEL are used interchangeably. In the following description the term pel will be used for consistency of reference.

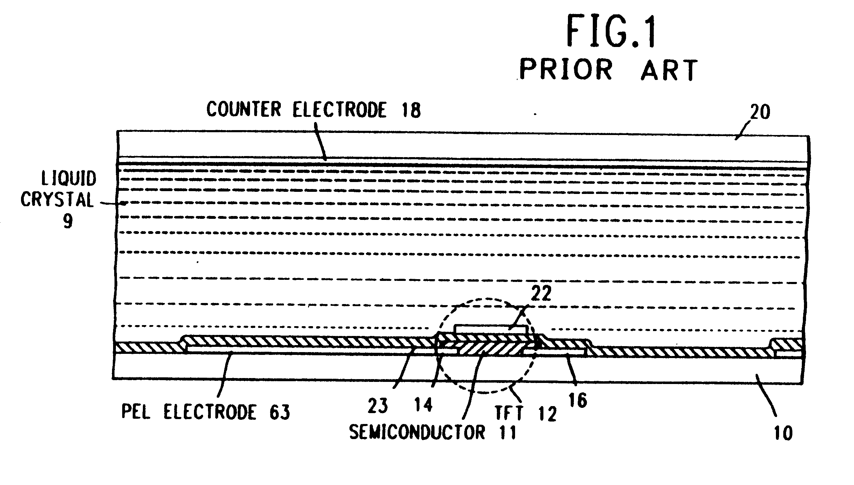

Figure 1 depicts a typical prior art thin-film transistor liquid-crystal (TFT/LC) picture element - (pel) 9 in cross section. One of these terminals, called the source 14 in much of the literature, connects to a conductive element whose size and shape becomes the size and shape of the pel since this electrode 14 is also one electrode (pel electrode) of the local liquid crystal (LC) cell 9. The other, or counterelectrode of the LC cell 9, one finds on passing through the liquid crystal media. It is a uniform area counterelectrode 18 common to all pixels and is typically a transparent conductive film (say indium tin oxide) deposited on one side of the top glass plate 20. The top plate and the substrate are held at a fixed separation by spacers, not shown, and the liquid crystal fluid is contained therein.

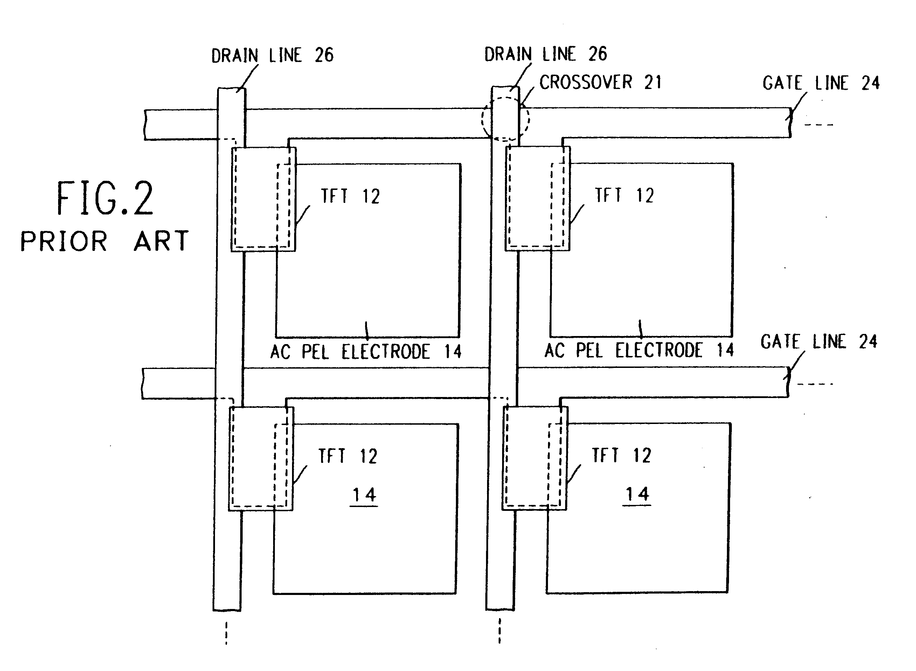

The remaining two terminals of the TFT 12 are called the gate 22 and drain 16. All gates in a pel row are electrically connected by a conductor - (line), running, for example, horizontally across the display. The number of such gate lines 24 is equal to the number of rows in the matrix display. In a similar fashion, but in a direction orthogonal to the gate lines, drain lines 26 electrically connect all drains in a pel column. Since the plurality of gate lines are orthogonal to the plurality of drain lines on the same substrate, some measure to electrically isolate these must be taken (they run over each other and short out the whole array otherwise). This is done by depositing an insulating layer on top of the first set of lines before the second set is deposited. The intersections are referred to as crossovers indicated by the numeral 21 on Figure 2.

A frequent variation on the basic, prior art design involves adding a capacitor electrically in parallel with the LC pel (see prior art section). This can be done in various ways, but is undesirable since the capacitor is also a large yield detractor. The scheme of this invention can, however, be used with a capacitor as well.

The crossovers are quite prone to have shorts and these can be serious as they can take out an entire row or column of pels making the panel unusable. Since there are as many crossovers as pels (> 100,000 in any practical display, with a million pels desirable), eliminating the crossovers significantly increases yield, other things remaining the same.

The prior art includes many variations on the details of the TFT: fabrication steps, materials, structure, contacts, number of photolithography steps, etc. However, none of the known prior art deals directly with the elimination of crossovers on the substrate which necessitates the deposition of a crossover insulation layer either as a separate step or when the gate oxide is being deposited.

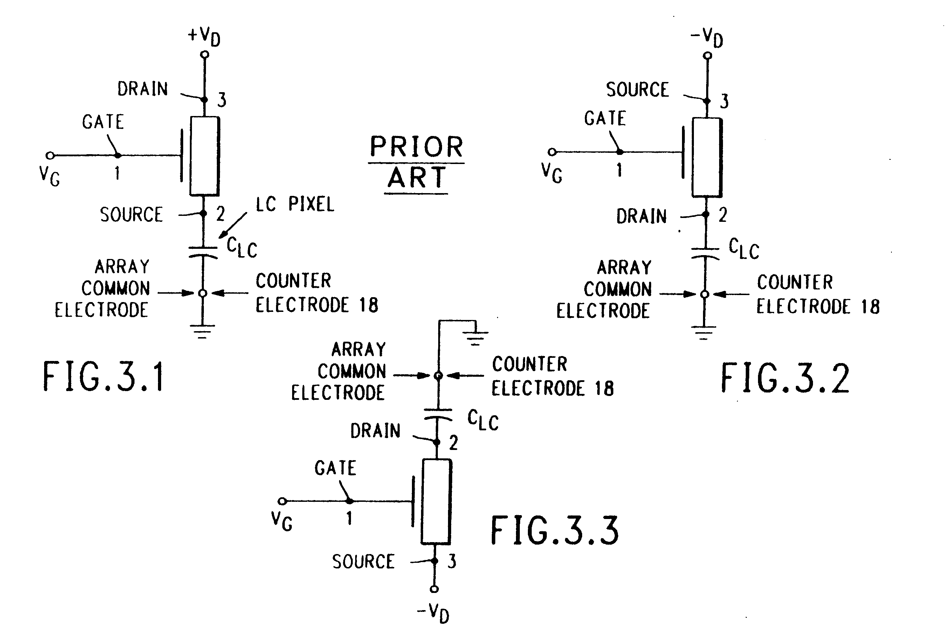

Each pel in the TFT/LC matrix shown - schematically in Figure 2 can be represented by the simplified equivalent circuit shown in Figure 3.1. The liquid crystal cell is modelled as an ideal capacitor, but a more realistic representation is that of a lossy capacitor, that is, the parallel combination of a resistor and an ideal capacitor.

For a positive data voltage, $+V_D$, the liquid crystal pixel capacitance ($C_{LC}$) will charge to approximately $+V_D$ when the positive gate voltage $V_G$ is applied to the gate terminal 1 of the TFT. For purposes of stability, the LC cell is conventionally driven with AC excitation. This is accomplished by alternating the data voltage polarity at the display frame rate; the condition for negative data voltage is shown in Figure 3.2. Note in Figure 3.2 that while the physical terminals of the TFT, labelled 1, 2 and 3 remain fixed in relation to the rest of the circuit, the designations of source and drain have changed. It is well-understood by persons skilled in the art that since the TFT is physically symmetrical, and since charge can flow in either direction through the TFT, that the terminal naming convention is to call the most negative terminal the source. If the circuit of Figure 3.2 is redrawn with the source at the bottom, as it is in Figure 3.1, the result is shown in Figure 3.3. It is now apparent that in case 3.1, the circuit operates as a source follower, while in case 3.2 or 3.3, it operates as an inverter; the effective gate drive is different for these two cases.

It should be appreciated that the basic selection process derives from the fact that, regardless of data polarity, the only time the LC pixel capacitance will charge is when $V_G$ (gate signal) and $V_D$ - (drain or source signal) are present simultaneously. One signal without the other will have no effect on the electrical (and, therefore, optical) state of the pixel. The problem is to achieve this operation without the physical crossovers of the lines carrying the $V_G$ and $V_D$ signals.

An extremely large number of publications on this topic exist. A recent review is 'The Thin Film Transistor -A Late Flowering Bloom,' by T P Brody, IEEE Trans on Electron Devices, November 1984.

Another broad survey type article is Lakatos, 'Promise and Challenge of Thin Film Approaches to Active Matrices', 1982 Int'l Display Research Conference (SID, Los Angeles).

Most of the literature deals with matrix type displays; but some deals with simple segmented displays. The present invention applies to matrix displays using liquid crystals and thin film transistors.

US-A-4,385,292 is exemplary of the prior art and relates to segmented type displays rather than to matrix displays. US-A-4,385,292 discloses - (column 10, lines 12-26) putting TFTs and counterelectrodes on both substrates Figures 11 and 12. However, in all of the examples, the electrical selection of any given TFT is through its electrodes (e.g gate and source) both of which are on the same substrate as the TFT in question. Thus, while using both substrates, the function is completely different from the present invention. However, the display characters of this patent are not concerned with matrix TFT switching and the attendant crossings of row and column select lines.

US-A-4,332,075 discloses a method for producing thin film transistor arrays and is essentially exemplary of the art. Specifically it teaches a particular method for fabricating the individual TFT elements as used in such an array. It is not concerned with nor does it teach a method for eliminating crossovers in the overall TFT/LC display matrix as is taught by the present invention.

US-A-4,386,352 and US-A-4,431,271 both deal with enhancing the capacitive effects within matrix type liquid crystal displays which in turn enhance the operation of the TFT switching elements. Both are thus related to TFT/LC display devices and further, generally describe the utilisation of capacitance for enhancing the operation of the individual TFT switching elements. However, neither of these patents are in any way related to the problem of eliminating substrate crossover problems in the resultant matrix display device.

Accordingly the present invention provides an improved TFT/LC structure which affords a significantly higher manufacturing yield, in particular such structure which essentially eliminates crossover defects in the transistor switching array.

The invention further provides such a structure wherein no row-column selection line crossovers occur on the TFT substrate.

The objects of the present invention are accomplished in general by an improved thin film transistor (TFT) switching array for liquid crystal - (LC) display applications. Specifically the invention discloses a TFT array structure which eliminates crossover-defects by eliminating the crossovers adjacent to or on the TFT substrate. Row selection of the gates is done in a conventional way with metal lines. Column selection to the source or drain is done via segmented orthogonally disposed counterelectrodes on the top glass plate. The counterelectrodes are registered with the pel electrodes on the substrate. Pel selection occurs by signals to a TFT gate on one substrate in conjunction with data signals, applied to conductors on the opposite substrate, whose effect is coupled through the liquid crystal to the TFT sources or drains.

These and other objects, features and advantages of this invention will be apparent from the descriptions herein and the accompanying drawings in which:

Figure 1 is a cross-sectional view of one element of a prior art TFT/LC array.

Figure 2 comprises a top view of several individual elements of a matrix type TFT/LC display utilising prior art matrix elements of the type shown in Figure 1.

Figures 3.1, 3.2 and 3.3 comprise equivalent circuit diagrams for an individual TFT/LC prior art pel element.

Figure 4 comprises a cross-sectional view of a single TFT/LC display element constructed in accordance with the teachings of the present invention.

Figures 5.1 and 5.2 are waveforms illustrating how the matrix display of Figure 5.3 would be energised to produce the specific optical effect shown in Figure 5.4.

Figure 6 comprises an exploded view of a 3 ˣ 3 TFT/LC display matrix constructed in accordance with the present invention clearly illustrating the column segmented counterelectrode fixed to the top glass plate of the display matrix structure and the common connection of the source electrodes on the bottom glass plate.

Figure 7.1 and 7.2 comprise equivalent electrical circuits of the device of the present invention as shown in Figure 6.

Figure 8 comprises a set of equivalent circuit diagrams contrasting the electrical characteristics of a TFT switching element constructed in accordance with the teachings of the present invention to a similar prior art device.

Figure 9 comprises an equivalent circuit diagram of a complete 3 × 3 no-crossover TFT/LC display matrix constructed in accordance with the teachings of the present invention.

In conventional state of the art, TFT/LC matrix displays the row electrodes are comprised of a set of parallel metal lines deposited onto the substrate. Each row line connects to the gate of every TFT in that row. A second set of parallel metal lines, oriented orthogonal to the first set, is also deposited on the substrate; each of these column lines connects to the drain of each TFT in a column. Since the two sets of metal lines must be electrically isolated, an insulator is deposited over the first set of metal lines prior to the deposition of the second set. The source of each TFT connects to a pel electrode which serves as one contact to the liquid crystal (LC) material. A continuous transparent electrode on the bottom side of the top glass plate serves as the common return electrode for all of the LC cells in the matrix.

Since these metal-metal crossovers are the sources of many serious (line) defects, usually because of pinholes in the insulator, improving their integrity is a necessary step in the evolution of this technology. It is this evolutionary step that comprises the main thrust of the present invention.

The terms 'row' and 'column' as used in the present description and claims would normally refer to the horizontal and vertical axes, respectively, of a conventional rectangular display. However, since the row and column drive lines could be easily reversed, as will be appreciated by those skilled in the art, the terms are intended to refer to first and second orthogonal axes without regard to their orientation with respect to a viewer.

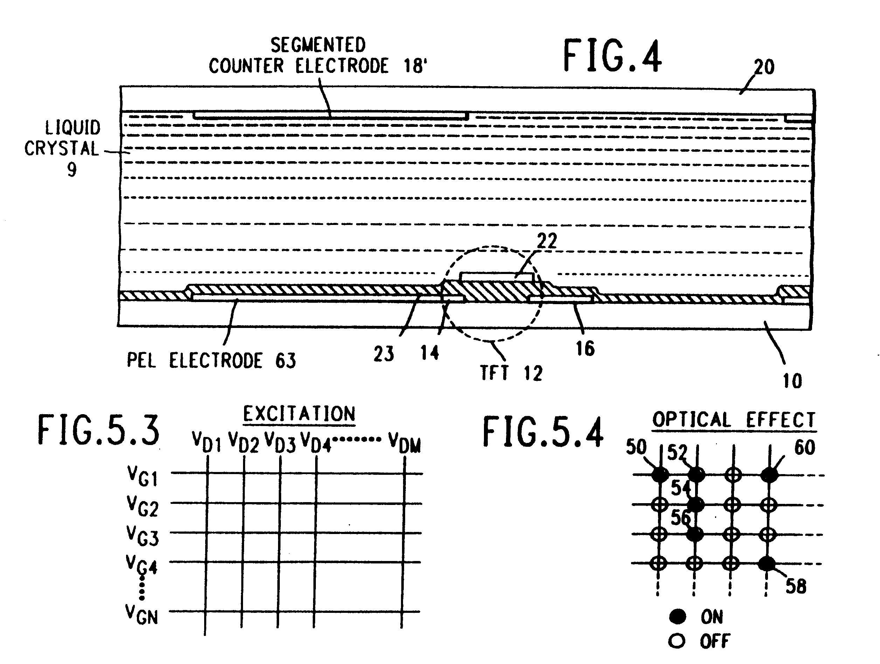

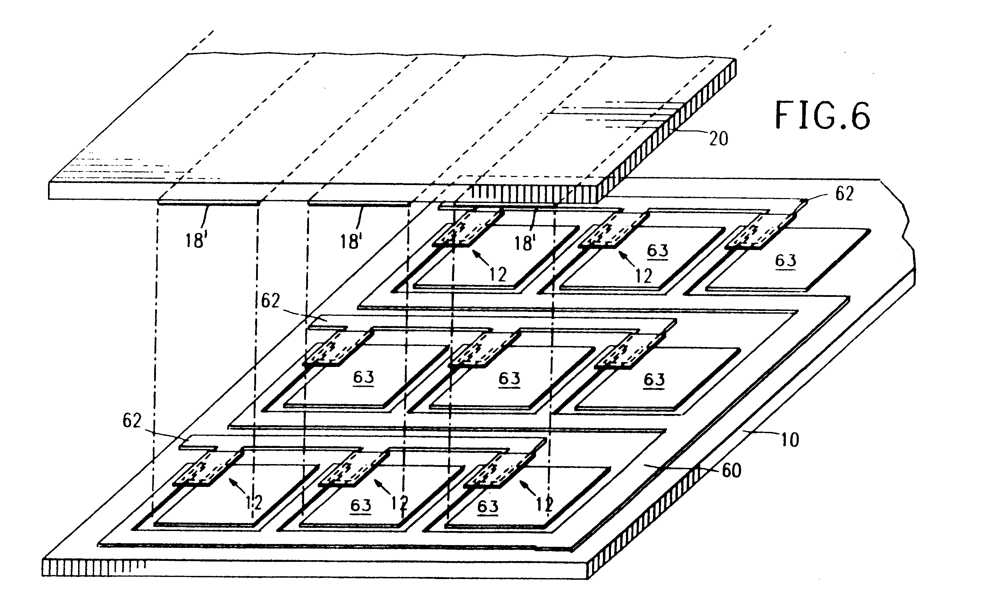

The circuit design illustrated in Figures 4 and 6 shows how to eliminate crossover defects by eliminating crossovers. It should be noted that the same reference numerals are used in Figures 4 and 6 as were used in Figure 1 to refer to similar elements of the TFT/LC cell. The proposed TFT circuit array is configured to provide the same electrical function as the conventional array described with respect to Figure 1 above, but contains no crossovers. All TFT sources 16 in the array are electrically common and connected by one off-glass line 60 and contact to a suitable potential. The gates 22 are connected in conventional fashion by suitable lines 62 along a first othogonal axes (by row). The column selection is done by segmenting the counterelectrode 18' on the top glass plate 20 into parallel lines orthogonal to (e.g. columns) the gate lines 62 which are registered with the pel electrodes 63 on the substrate, and applying suitable potentials. The electrical operation of the device is similar to a conventional array.

Advantages of this array include the elimination of crossover defects, and the distribution of the required peripheral circuits (also yield detractors) to two glass plates instead of one. Each plate then requires half the number of perfect circuits and/or connections.

The key element in the present invention is to construct a TFT/LC cell by placing one set of conductive lines, say the gate lines, on the glass substrate, and the orthogonal set of conductive lines on the top glass plate rather than on the substrate plate separated by an insulating layer as in the prior art.

A cross-sectional view of one element of the present no-crossover array is shown in Figure 4. Note that this view shows little difference with respect to Figure 1 except for the segmentation of the top or counterelectrode 18. The isometric view of the cell in Figure 6 shows significant differences, however. First, note that there are no electrical crossovers on the substrate 10. Secondly, one electrode of each and every TFT in the array connects to a common bus 60 on the substrate.

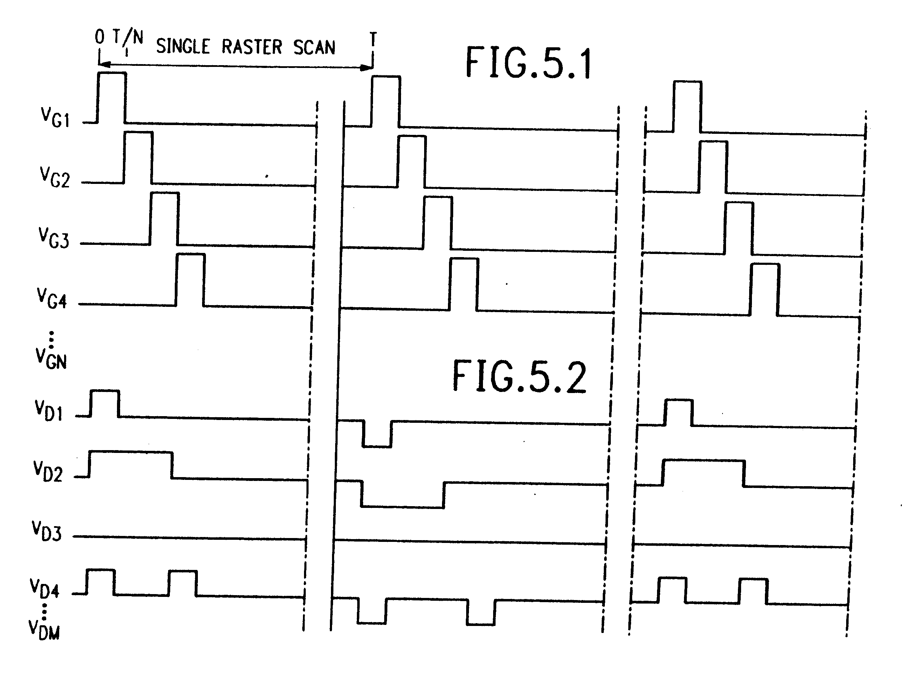

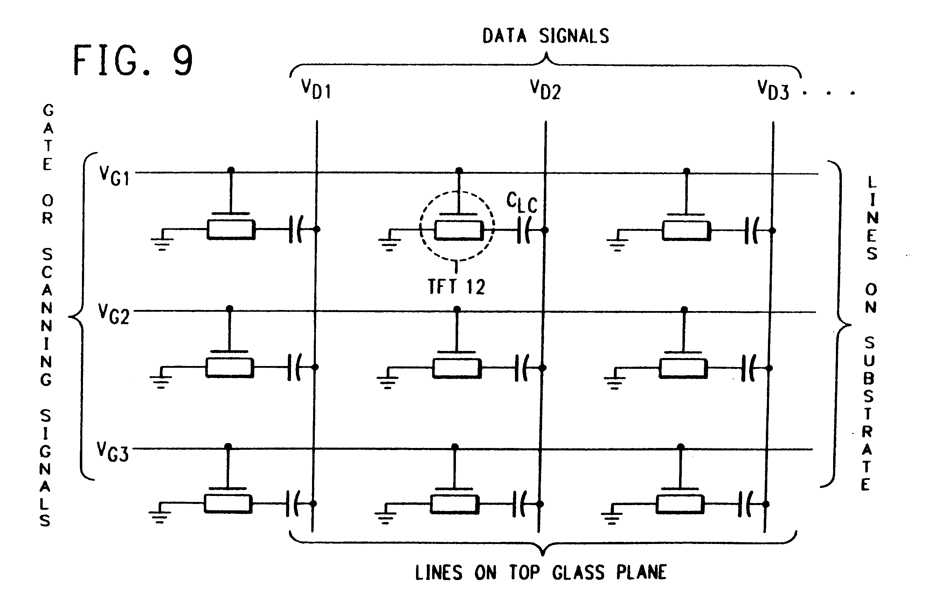

Operationally, the no-crossover cell is addressed by applying signals in time sequence to the gate bus line 62 on the substrate. This is exactly the same as in the prior art. The data signals, however, are now applied to the segmented counterelectrodes on the top glass plate. In the prior art the data signals were applied to the drain - (or 'source' depending on terminology) bus lines which were also on the substrate. Finally, the common bus in the no-crossover scheme is connected to a suitable potential such as ground, and is physically on the substrate; in the prior art the counterelectrode was a uniform area electrode located on the top glass plate and was connected to ground. The overall equivalent circuit for the complete matrix is shown in Figure 9. The applied signals are shown in Figure 5.

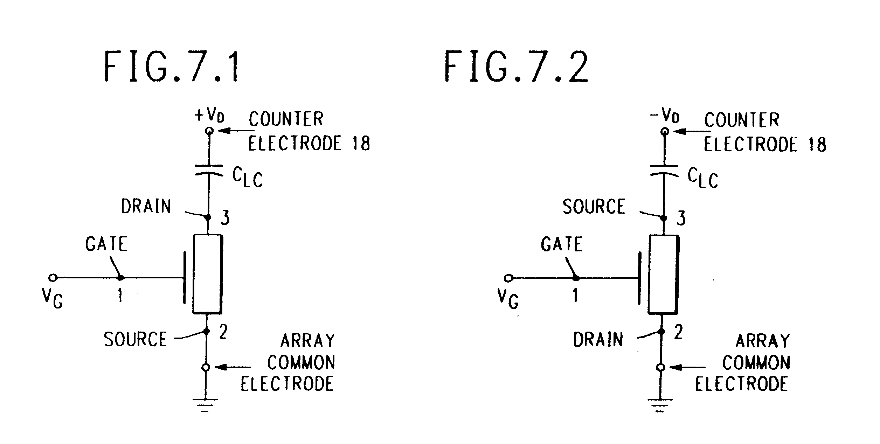

The equivalent circuits for the no-crossover - scheme are shown in Figure 7 for both positive and negative data signals. It will be appreciated by persons skilled in the art that the circuits of Figures 3 and 7 perform the same function, that is to charge the liquid crystal capacitance to a potential +$V_D$ or to a potential -$V_D$ only when the gate signal is present and the data signal is present on the source (drain) via the segmented counterelectrode.

The electrical signals, and the resulting state of the LC pixels for rows and columns 1 to 4 of an exemplary 4 x 4 matrix display are shown in Figure 5.

Figures 5.1 to 5.4 describe, with the aid of waveforms and wiring diagrams, the operation of such a TFT/LC matrix type display. It should be understood that the description of the operation of the present invention applies equally well to the prior art device such as shown in exemplary form in Figure 1. Again, it is reiterated that the operation of the underlying TFT/LC device is not essentially affected by the present invention but rather it is the characteristics of the TFT wiring and the switching, as has been explained previously, which are involved.

Figures 5.1 and 5.2 illustrate specifically the four waveforms that would be applied to the sets of orthogonal excitation lines shown in Figure 5.3, e.g. $V_{D1}$ to $V_{D4}$ and $V_{G1}$ to $V_{G4}$. As will be apparent to those skilled in the art, whenever there is a pulse coincidence on the $V_G$ and the $V_D$ lines, the liquid crystal cell at that intersection point will be energised to, in effect, activate the picture element to form a suitable image. The particular pulse inputs shown in Figure 5.1 and 5.2 on their respective energisation lines will produce the optical effect illustrated in Figure 5.4. To cause the pel at the intersection of lines $V_{D1}$ and $V_{G1}$ to be energised, an appropriate pulse appears on these two lines. Similarly, to produce the active picture elements at points 52, 54 and 56 on Figure 5.4, a pulse appears concurrently on lines $V_{G2}$, $V_{G3}$, $V_{G4}$ and $V_{D2}$. It is noted that the pulse on $V_{D2}$ continues over the three time sequential pulses appearing on lines $V_{G1}$, $V_{G2}$ and $V_{G3}$. Similarly, the picture elements 58 and 60 of Figure 5.4 are energised by the occurrence of the pulses on lines $V_{G1}$, $V_{G4}$ and the two pulses on line $V_{D4}$. In the particular embodiment illustrated, it will be noted that the raster is generated from top to bottom via the lines $V_{G1}$, to $V_{GN}$. If one wished to generate the raster horizontally, it would be necessary to rotate the glass 90°, as it is the gate signals that must be scanned. OTherwise, a pel that had been charged up, for example, the line before, would discharge if the TFT's gate is turned on again and the drain line is grounded (as it would be if the scanning signal is on the drain lines and the scan has already passed that line. It will be apparent from Figure 5.1 that the generation of three separate rasters for the 4 x 4 matrix is actually shown. The three sets of four pulses on line $V_{G1}$ to $V_{G4}$ generate three row scans (horizontal rasters).

Also referring to Figure 5.2 it is noted that on alternate raster scans the polarity of the $V_D$ energising pulses alternates from positive to negative as was described previously. This provides AC excitation and retards electrochemical degradation of the LC cell which would otherwise result from DC excitation.

The electronic circuitry for producing the requisite raster scan pulses and image information are well-known in the art and form part of the present invention.

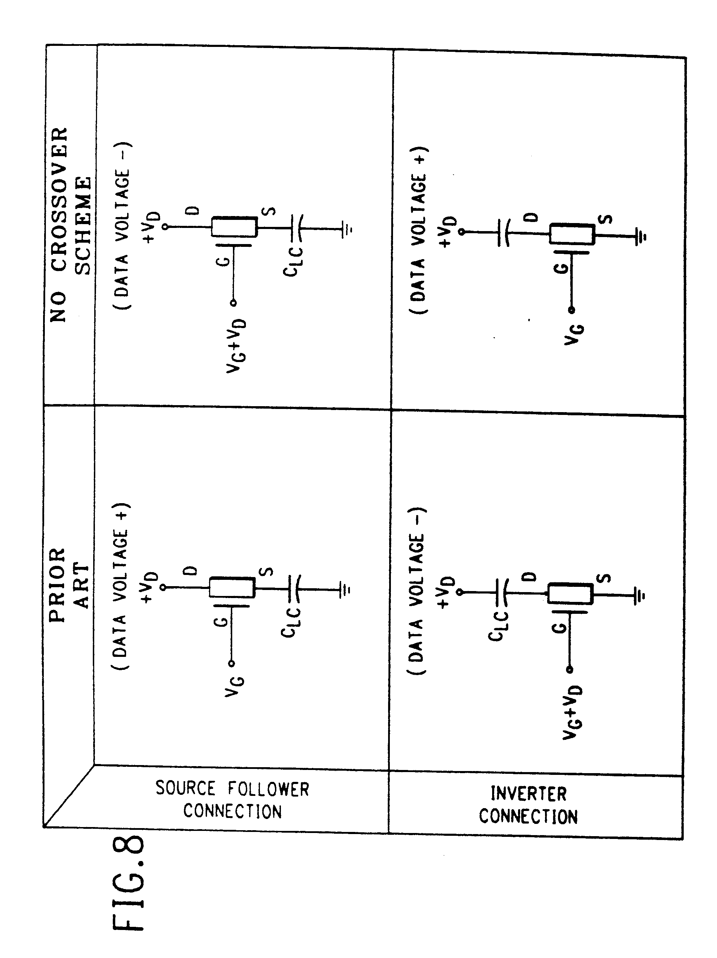

To aid the comparison of the functional equivalence of the circuits of Figures 3 and 7, they are redrawn in Figure 8 with all source terminals pointing downwards and all potentials adjusted to be above ground (adding a potential, say $+V_D$, to every terminal in the circuit does not change the operation of the device. In this way, the $-V_D$ potential has been eliminated.)

The principal advantage of the present no-crossover scheme is yield improvement. This occurs in several ways. The total elimination of a large yield detractor, crossovers obviously removes this feature as a problem. Moving half the lines to the second glass plate results in fewer lines on the substrate to have 'opens, since the substrate carrying the TFT array is the most complicated and expensive element in the display. Increasing yields in this art has a significant effect on reducing manufacturing costs. Opens on the top glass plate will be fewer in number since the line width may be significantly greater; they are a full pixel wide instead of a small fraction of a pixel wide resulting in negligible line failures.

The invention also has an advantage over the prior art in terms of switching speed. The weakest drive condition is the source follower cycle. As the capacitor charges toward $V_D$ the effective drive - ($V_{gate} - V_{source}$) is reduced and the charging rate is slowed. In the no-crossover scheme, the effective gate potential is larger ($V_G + V_G$ compared with $V_G$) and will therefore charge to a given potential faster. See Figure 8. In the inverter configuration, the prior art scheme has the larger gate potential but this is of little consequence since the gate-to-source potential is constant during charging and, in the normal region of operation, the on resistance of the TFR will be insensitive to further increases in the gate potential above $V_G$.

It should be appreciated that the central idea taught by the present invention can be applied as well to liquid crystal displays fabricated on single crystal silicon substrates and incorporating traditional MOSFET switching elements. The common connection to each FET could be by a highly doped substrate, by an implanted or diffused 'line' in the Si substrate, or by a metal line deposited on the substrate.

Silicon-based LC displays have been described in the literature and can operate either as direct view displays or magnified (projection) displays.

The central idea is also applicable to transmissive or reflective type LC displays and to various liquid crystal effects such as twisted nematic and guest-host display effects.

It is also applicable to other display media which could be addressed by TFT arrays using the prior art technique. For example, electrochromic or electrophoretic display effects.

**Claims**

1. A thin-film transistor/electro-optic display matrix formed between a substrate and a closely spaced glass plate wherein, interconnect means for electrically actuating individual picture elements within the array without conductor-conductor crossovers comprise;

a first set of common conductors on the substrate, together with all of the TFT switching elements comprising the array, which connect all drains on the substrate to a first common point, each TFT switching element having source, gate and drain electrodes,

a first set of orthogonal conductors connecting each row of gates on the substrate to a common point for each said row,

a second set of conductors orthogonal to the first set of orthogonal conductors located on the top glass plate in registration with corresponding pel electrodes on the substrate, each pel electrode being connected to the source electrode of an associated TFT switching element to effect coupling through the electro-optically active media with the sources of all the TFT elements of the array on the substrate, wherein the second set of orthogonal conductors on the top glass plate and the pel electrodes on the substrate comprise the actuating electrodes for an electro optically active media located therebetween.

2. A thin-film transistor/electro-optic display matrix array as claimed in claim 1 wherein in the second set of orthogonal conductors, each conductor is substantially the same width as the electro-optic picture element which it actuates.

3. A thin-film transistor/electro-optic display matrix array as claimed in claim 2 wherein the conductors are of metal or conducting semiconductor material.

4. A thin-film transistor/electro-optic display matrix array as claimed in claim 3 wherein the source and drain electrodes of each of the TFT switching elements reverse their function when the polarity of the signals applied thereto is reversed but wherein the switching action of the TFT switching element to actuate its associated electro-optic picture element is unaffected by the polarity reversal.

5. A thin-film transistor/liquid crystal (TFT/LC) matrix array formed between a substrate and a closely spaced glass plate wherein, interconnected means for electrically actuating individual picture elements within said array without conductor-conductor crossovers comprise;

a first set of common conductors on the substrate together with all of the TFT switching elements comprising the array which connects all drains on the substrate to a first common point,

each TFT switching element having source, gate and drain electrodes, a first set of orthogonal conductors connecting each row of gates on the substrate to a common point for each said row,

a second set of conductors orthogonal to the first set of orthogonal conductors located on the top glass plate in registration with corresponding pel electrodes on the substrate, each connected to the source electrode on an associated TFT switching element to effect coupling through the liquid crystal with the sources of all the TFT elements of the array on the substrate,

wherein the second set of orthogonal conductors on the top glass plate in the corresponding pel electrodes on the substrate comprise the actuating electrodes for a liquid crystal media located therebetween.

6. A thin-film transistor/liquid crystal matrix array as claimed in claim 5 wherein in the second set of orthogonal conductors, each conductor is substantially the same width as the liquid crystal picture element which it actuates.

7. A thin-film transistor/liquid crystal matrix array as claimed in claim 6 wherein the conductors are metal or conducting semiconductor material.

8. A thin-film transistor/liquid crystal matrix array as claimed in claim 7 wherein the source and drain electrodes of each of the TFT switching elements reverse their function when the polarity of the signals applied thereto is reversed but wherein the switching action of the TFT switching element to actuate its associated liquid crystal picture element is unaffected by the polarity reversal.

9. A thin-film transistor/liquid crystal (TFT/LC) display matrix wherein the TFT switching array when suitably actuated performs raster and image generating functions as individual LC picture elements (pels) are selectively actuated and wherein all orthogonal switching line crossovers on the substrate carrying the TFT switching elements are eliminated, each TFT switching element has a source, gate, and drain electrode,

all of the TFT drains (sources) in the array being connected by a common conductor on the substrate and off-glass contact to a suitable common potential,

first means connected to all the TFT gates to achieve row selection comprising electrically conductive lines on the substrate along a first orthogonal axis,

second means for achieving column selection comprising a set of counter electrodes segmented into parallel lines orthogonal to the gate selection lines located on a top glass plate closely spaced from the substrate and having a liquid crystal media therebetween, the segmented counter electrodes being registered with corresponding pel electrodes on the substrate, the pel electrodes each being electrically connected to the source electrode of its associated TFT switching element,

means for applying suitable potentials to the row and column selection lines to energise particular pels in the display and wherein switching of the individual TFTs is accomplished by coupling, via the liquid crystal media, between the segmented counter electrodes and the pel electrodes in time coincidence with an energising potential being supplied to the gate electrodes of the individual TFTs via the gate selection lines.

10. A thin-film transistor/liquid crystal (TFT/LC) matrix display including an MxN matrix of TFT/LC picture elements wherein the associated LC cell is energised (turned on) when its associated TFT switching element is energised by concurrently applying signals to its source, gate and drain electrodes, the TFTs being located on a substrate also containing a first set of pel electrodes for the individual LC picture elements (pels), each pel electrode being connected to the source electrode of its associated TFT switching element, corresponding pel electrodes being located on a glass plate spaced above said substrate with a liquid crystal media disposed therebetween, characterised by;

interconnect means for connecting the individual TFTs to energise same including a set of common conductors on the substrate with the TFTs connecting all drains on the substrate to a first common electrical point,

a first set of orthogonal conductors connecting the gates of each row of TFTs comprising said matrix to a set of common points, one for each said row,

a set of conductors orthogonal (second set) to the first set of orthogonal conductors located on the glass plate in registration with the corresponding pel electrodes on the substrate to effect coupling through the liquid crystal media with associated source electrodes of columns of TFT elements comprising the array on the substrate without metal-metal crossovers,

wherein the second set of orthogonal conductors on the top glass plate together with the first set of pel electrodes on the substrate comprise the actuating electrodes for the individual liquid crystal picture elements located therebetween when suitably energised.

# FIG.1
## PRIOR ART

COUNTER ELECTRODE 18

LIQUID CRYSTAL 9

20

22

PEL ELECTRODE 63

23 14

SEMICONDUCTOR 11

TFT 12

16

10

0 223 967

FIG.2
PRIOR ART

Labels: GATE LINE 24, DRAIN LINE 26, CROSSOVER 21, TFT 12, AC PEL ELECTRODE 14, 14

PRIOR
ART

FIG.3.1

FIG.3.2

FIG.3.3

# FIG.4

SEGMENTED COUNTER ELECTRODE 18'

LIQUID CRYSTAL 9

PEL ELECTRODE 63

23  14

TFT 12

16

22

20

10

# FIG.5.3

EXCITATION

$V_{D1}$ $V_{D2}$ $V_{D3}$ $V_{D4}$ ······· $V_{DM}$

$V_{G1}$

$V_{G2}$

$V_{G3}$

$V_{G4}$

$V_{GN}$

# FIG.5.4

OPTICAL EFFECT

50  52  60

54

56

58

● ON
○ OFF

0 223 967

FIG.5.1

FIG.5.2

0 223 967

FIG.6

0 223 967

# FIG.7.1

+$V_D$ COUNTER
ELECTRODE 18

$C_{LC}$

DRAIN

3

GATE

$V_G$ 1

SOURCE 2

ARRAY
COMMON
ELECTRODE

# FIG.7.2

−$V_D$ COUNTER
ELECTRODE 18

$C_{LC}$

SOURCE

3

GATE

$V_G$ 1

DRAIN 2

ARRAY
COMMON
ELECTRODE

0 223 967

FIG.8

|  | PRIOR ART | NO CROSSOVER SCHEME |
|---|---|---|
| SOURCE FOLLOWER CONNECTION | (DATA VOLTAGE +) | (DATA VOLTAGE −) |
| INVERTER CONNECTION | (DATA VOLTAGE −) | (DATA VOLTAGE +) |

FIG. 9

DATA SIGNALS

GATE OR SCANNING SIGNALS

LINES ON SUBSTRATE

$V_{D1}$  $V_{D2}$  $V_{D3}$ ...

$V_{G1}$

$C_{LC}$

TFT 12

$V_{G2}$

$V_{G3}$

LINES ON TOP GLASS PLANE

0 223 967

## DOCUMENTS CONSIDERED TO BE RELEVANT

EP 86113234.8

| Category | Citation of document with indication, where appropriate, of relevant passages | Relevant to claim | CLASSIFICATION OF THE APPLICATION (Int. Cl.4) |
|---|---|---|---|
| X,E | EP - A1 - 0 197 703 (GENERAL ELECTRIC)<br>* Page 3, lines 4-16; fig. 2-5* | 1-3,5-7,9,10 | G 02 F 1/133<br>G 09 G 3/36<br>//G 01 L 27/12 |
| A | | 4,8 | |
| | -- | | |
| X | EP - A2 - 0 145 520 (COMMISARIAT)<br>* Page 2, line 12 - page 3, line 24; fig. 2-4 * | 1,3,5,7,9,10 | |
| A | | 2,4,6,8 | |
| | -- | | |
| X,P | EP - A1 - 0 193 759 (OVONIC)<br>* Page 4, line 5 - page 5, line 11; fig. 1-9 | 1-3,5-7,9,10 | |
| A | | 4,8 | TECHNICAL FIELDS SEARCHED (Int. Cl.4) |
| | -- | | |
| A | EP - A1 - 0 070 598 (PHILIPS)<br>* Claim 1; fig. 1,3,5 * | 1-3,5-7,9,10 | G 02 F 1/00<br>G 09 G 3/00<br>H 01 L 21/00<br>H 01 L 27/00<br>H 01 L 31/00 |
| | ---- | | |

The present search report has been drawn up for all claims

| Place of search | Date of completion of the search | Examiner |
|---|---|---|
| VIENNA | 12-02-1987 | GRONAU |